# EUROPÄISCHE PATENTANMELDUNG

(11) **EP 1 030 510 A1**
(43) Veröffentlichungstag der Anmeldung: **23.08.2000**
(21) Anmeldenummer: 00100210.4
(22) Anmeldetag: 14.01.2000
(51) Int. Cl.: H04N 1/195

(54) **Vorrichtung zur Herstellung eines fotografischen Bildes**

(30) Priorität: 17.02.1999 DE 29902750 U
(71) Anmelder: GRETAG IMAGING Trading AG, 5430 Wettingen (CH)
(72) Erfinder: Frick, Beat, 8107 Buchs (CH); Fenner, Jürg, 8600 Dübendorf (CH)
(74) Vertreter: Schwabe - Sandmair - Marx

(57) **Zusammenfassung**

Die Erfindung betrifft eine Vorrichtung zur Herstellung eines fotografischen Bildes auf einem Kopiermaterial, wobei eine Belichtungseinrichtung mit einer Abbildungsoptik zur Herstellung des fotografischen Bildes vorgesehen ist, die eine Spiegelmatrix mit einzeln auslenkbaren Spiegeln aufweist, wobei die Belichtungseinrichtung eine breitbandige Lichtquelle, beispielsweise eine Halogenlichtquelle, umfaßt, wobei im Strahlengang zwischen der Lichtquelle und der Spiegelmatrix eine Filtereinrichtung angeordnet ist, um bestimmte Spektralbereiche bzw. bestimmte Lichtmengen auszufiltern bzw. durchzulassen.

## Beschreibung

Die Erfindung betrifft eine Vorrichtung zur Herstellung eines fotografischen Bildes, insbesondere einer Kopie von in elektronischer Form vorliegenden Bilddaten einer Vorlage über bevorzugt streifenweises Aufbelichten der Bildinformation der Vorlage auf ein fotografisches Kopiermaterial gemäß dem Anspruch 1. Dabei werden die Bilddaten mittels einer Abtasteinrichtung erzeugt und anschließend über eine Bilddatenverarbeitungseinrichtung verarbeitet, um in die elektronische Form gewandelt zu werden, die für die Aufbelichtung nötig ist.

Digitale Bilderzeugungsgeräte fotografischer Basis, sog. digitale fotografische Printer, erzeugen Papierabzüge bzw. Kopien durch Aufbelichten der Bildinformation der zugrundeliegenden, in elektronisch gespeicherter Form vorliegenden Vorlage auf ein fotografisches Kopiermaterial. Zum Beispiel kann die Bildinformation der Vorlage mittels einer digital betreibbaren Spiegelmatrix bildmäßig optisch dargestellt werden. Dementsprechend kann eine optische Darstellung der Vorlage erzeugt und diese optische Darstellung der Vorlage auf das Kopiermaterial abgebildet und damit aufbelichtet werden.

Durch zeilen- bzw. streifenweises Aufbelichten unter Verwendung der Mikrospiegel der Spiegelmatrix lassen sich in einer Richtung quer zu den Zeilen bzw. Streifen theoretisch beliebig große fotografische Bilder herstellen.

Dabei können hintereinander jeweils streifenförmige, in ihrer Längsrichtung die gesamte Vorlage abdeckende Abschnitte der Vorlage mittels der Spiegelmatrix optisch dargestellt und nacheinander in entsprechender räumlicher Zuordnung auf das Kopiermaterial aufbelichtet werden. Die korrekte räumliche Anordnung der aufbelichteten Streifen wird dabei durch relative Versetzung des Kopiermaterials zum Belichtungsstrahlengang bewirkt. Dies kann durch einen Vorschub des Kopiermaterials oder durch eine entsprechend bewegliche Abbildungsoptik erreicht werden. Die Relativversetzung erfolgt synchron mit dem Wechsel der dargestellten Streifen der Vorlage. Sind die Streifen mehrere Zeilen breit, können sich die benachbarten Streifen gegebenenfalls auch überlappen. Wird das Kopiermaterial je nach Überlappungsgrad bereichsweise mehrfach belichtet, muß dies bei der Bemessung der Kopierlichtmenge bei den einzelnen Belichtungsschritten entsprechend berücksichtigt werden. Dieses Belichtungsverfahren ist unter der Bezeichnung TIG (Time Integration Grayscale) bekannt.

Mit den vorstehend beschriebenen Methoden lassen sich unter Einsatz einer handelsüblichen Mikrospiegelmatrix relativ befriedigende fotografische Bilder herstellen. Die Herstellungskosten für derartige Vorrichtungen zur Herstellung eines fotografischen Bildes sind jedoch relativ hoch und häufig läßt die Geschwindigkeit, mit der diese fotografische Bilder herstellen können, zu wünschen übrig, insbesondere, wenn die Lichtintensität pro Flächeneinheit bei der Aufbelichtung gering ist, so daß lange Belichtungszeiten erforderlich sind.

Durch die vorliegende Erfindung soll nun eine Vorrichtung vorgeschlagen werden, die die obigen Nachteile im Stand der Technik beseitigen hilft. Die Lösung dieser der Erfindung zugrundeliegenden Aufgabe ergibt sich aus dem Anspruch 1.

Zweckmäßige Ausführungsformen der erfindungsgemäßen Vorrichtung ergeben sich aus den Unteransprüchen.

Gemäß der Erfindung ist die Vorrichtung zur Herstellung eines fotografischen Bildes auf einem Kopiermaterial mit einer Abtasteinrichtung versehen, um eine Vorlage zur Gewinnung von Bilddaten zur Herstellung des fotografischen Bildes abzutasten. Ferner ist eine Bilddatenverarbeitungseinrichtung vorhanden, die zur Verarbeitung der Bilddaten zu Steuersignalen zur Herstellung des fotografischen Bildes einsetzbar ist. Eine Belichtungseinrichtung mit einer Abbildungsoptik zur Herstellung des fotografischen Bildes ist an die Bilddatenverarbeitungseinrichtung angeschlossen. Die Belichtungseinrichtung weist eine Spiegelmatrix mit einzeln auslenkbaren Spiegeln auf. Die Belichtungseinrichtung weist eine bevorzugt breitbandige Lichtquelle, beispielsweise eine Halogenlichtquelle, auf und im Strahlengang zwischen der Lichtquelle und der Spiegelmatrix ist eine Filtereinrichtung angeordnet, um insbesondere bestimmte Lichtmengen für bestimmte Spektralbereiche einzustellen.

Während im Stand der Technik häufig sehr aufwendige Lichtquellen bei entsprechenden Vorrichtungen eingesetzt werden und das Licht, das von der Spiegelmatrix mit den Mikrospiegeln auf ein fotoempfindliches Kopiermaterial abgebildet wird, gefiltert wird, hat es sich überraschenderweise gezeigt, daß mittels einer herkömmlichen, bevorzugt breitbandigen Lichtquelle, beispielsweise einer Halogenlichtquelle, hohe Lichtdichten bzw. Lichtintensitäten erzielt werden können. Die Belichtung mittels der einzelnen Farben aus dem Lichtspektrum, die für eine angemessene Belichtung bestimmter Bildelemente nötig sind, lassen sich über einen entsprechenden Filter für verschiedene Farben und eine entsprechende Aktivierung der Mikrospiegel der Spiegelmatrix einstellen.

Die beispielsweise als Filterrad ausgestaltbare Filtereinrichtung kann über ihren Gesamtumfang mit mehreren Filterbereichen für jede Grundfarbe ausgestattet sein, um Totzeiten zu vermeiden bzw. die Geschwindigkeit der Vorrichtung zu erhöhen.

Eine Transporteinrichtung für ein lichtempfindliches Material ist zur Herstellung des fotografischen Bildes durch die Belichtungseinrichtung vorgesehen, wobei die Transportgeschwindigkeit des lichtempfindlichen Kopiermaterials unter Verwendung eines Sensors erfaßt bzw. überwacht wird. Der Sensor kann beispielsweise in Form einer optischen Abtasteinrichtung, einer mechanischen Abtasteinrichtung oder dergleichen vorgesehen sein, um die tatsächliche Transportgeschwindigkeit des Kopiermaterials auf der Transporteinrichtung zu erfassen. Vorteilhafterweise wird dann die gemessene Transportgeschwindigkeit des fotografischen Bildes zur Geschwindigkeitsregelung für die Transporteinrichtung eingesetzt und/oder die Belichtungsdauer bzw. - -intensitätsregelung über die Spiegel bzw. die Lichtquelle verwendet. Das heißt, aufgrund der tatsächlichen Geschwindigkeit, mit der das Kopiermaterial bewegt wird, wird entweder die Transportgeschwindigkeit beispielsweise mittels einem Schrittmotor innerhalb einer Regelschleife nachgeregelt oder es wird die Belichtungsdauer über die Spiegel der Spiegelmatrix angepaßt. Natürlich kann, wie oben angedeutet, auch die Intensität der Lichtquelle geändert werden, es kann eine zusätzliche Abdunklungs- bzw. Aufhellungseinrichtung, etwa in der Form einer LCD, die durchleuchtet wird, vorgesehen werden, oder dergleichen mehr. Natürlich können die besagten Maßnahmen innerhalb einer Regelschleife auch kombiniert und nicht nur einzeln eingesetzt werden.

Um die Lichtintensität der Lichtquelle sowohl integral als auch spektral zu überwachen, kann ein Meßsensor, beispielsweise eine Fotozelle, vorgesehen sein, die integral oder für einzelne Farben eine Messung für das Licht durchführt, das nicht zur Aufbelichtung auf das fotoempfindliche Kopiermaterial verwendet wird. Auf diese Weise kann die Leistung der Lichtquelle nachgeregelt werden oder es kann erfaßt werden, wann die Lichtquelle beispielsweise automatisch oder auch manuell ausgewechselt werden muß. Für die automatische Auswechslung aber auch für die manuelle Auswechslung kann beispielsweise ein Karussell, ein Schlitten oder dergleichen vorgesehen sein, der aktiviert wird, wenn die durch den Meßsensor erfaßten Werte außerhalb der Toleranz liegen. Andererseits kann auch über eine Regelschleife, beispielsweise bei Nachlassen der Lichtleistung, zunächst mehr Strom bzw. eine höhere Spannung der Lichtquelle zugeführt werden, um die Nutzungsdauer der Lichtquelle, beispielsweise einer Halogenlampe, zu verlängern.

Die Filtereinrichtung kann als Filterrad, als additiver bzw. subtraktiver Farbfilter und dergleichen ausgebildet sein.

Nachfolgend werden weitere Ausführungsformen mit Merkmalen gemäß der Erfindung näher erörtert, wobei unter Bezugnahme auf die beigefügten Darstellungen weitere Merkmale, Vorteile und Zielsetzungen gemäß der vorliegenden Erfindung offenbart werden, in welchen:
- Fig. 1 und 2: zwei schematische Skizzen mit einer Ausführungsform gemäß der Erfindung in einer schematischen, perspektivischen Darstellung zeigen,
- Fig. 3 und 4: zwei schematische, perspektivische Prinzipdarstellungen zur Erläuterung einer Ausführungsform gemäß der Erfindung zeigen, die eine Verstellung für die Vergrößerung ermöglichen,
- Fig. 5: eine Teilansicht einer Ausführungsform mit Merkmalen gemäß der Erfindung ist, wobei eine Filtereinrichtung aus Gründen der Anschaulichkeit weggelassen ist,
- Fig. 6 bis 8: drei schematische Darstellungen zeigen, die einen möglichen Betrieb der erfindungsgemäßen Vorrichtung erläutern.

Die nachfolgend erörterten Ausführungsformen gehen davon aus, daß ein Bild beispielsweise in der Form eines Negatives abgetastet worden ist, um hiervon Bilddaten zu erhalten, die in elektronischer Form gespeichert vorliegen, um auf ein fotoempfindliches Kopiermaterial abgebildet und damit aufbelichtet zu werden.

Dabei kann eine herkömmliche Abtasteinrichtung eingesetzt werden, um die Vorlage zur Gewinnung der Bilddaten zur Herstellung des fotografischen Bildes zu erhalten. Die Bilddaten werden anschließend in einer Bilddatenverarbeitungseinrichtung (nicht dargestellt) zur Verarbeitung der Bilddaten zu Steuersignalen zur Herstellung des fotografischen Bildes verarbeitet. Die Abtastung und Verarbeitung von Bilddaten ist im Stand der Technik hinreichend bekannt und braucht hier nicht weiter erörtert zu werden. Die verarbeiteten Bilddaten können anschließend in einen Speicher eingespeichert werden, um anschließend mit der Vorrichtung mit Merkmalen gemäß der Erfindung verarbeitet zu werden. Es ist verständlich, daß die prinzipielle Erfindung gemäß der vorliegenden Offenbarung prinzipiell auf die Belichtungseinrichtung gerichtet ist und dementsprechend die Abtasteinrichtung und die Bilddatenverarbeitungseinrichtung beliebig austauschbar sind. Die Belichtungseinrichtung gemäß der Erfindung kann dementsprechend an beliebig angepaßte Abtasteinrichtungen bzw. Bilddatenverarbeitungseinrichtungen angeschlossen werden und kann entsprechend auch für sich zum Gegenstand von unabhängigen Patentansprüchen gemacht werden. Die sich aus der Gesamtheit aller Helligkeits- und Farbinformationen für jeden einzelnen Bildpunkt der zu kopierenden Vorlage zusammensetzenden Bildinformationen der Vorlage können On-Line oder über einen Speicher von der erfindungsgemäßen Vorrichtung abgearbeitet werden. Aus einem Speicher (nicht dargestellt) könnten die Bildinformationen zur Steuerung pixelweise oder auch nach Farbanteilen getrennt abrufbar sein.

Unter der Bildinformation eines streifenförmigen Abschnittes der Vorlage ist die Gesamtheit der Helligkeits- und Farbinformationen von Vorlagebildpunkten zu verstehen, die zu dem betreffenden streifenförmigen Abschnitt der Vorlage gehören.

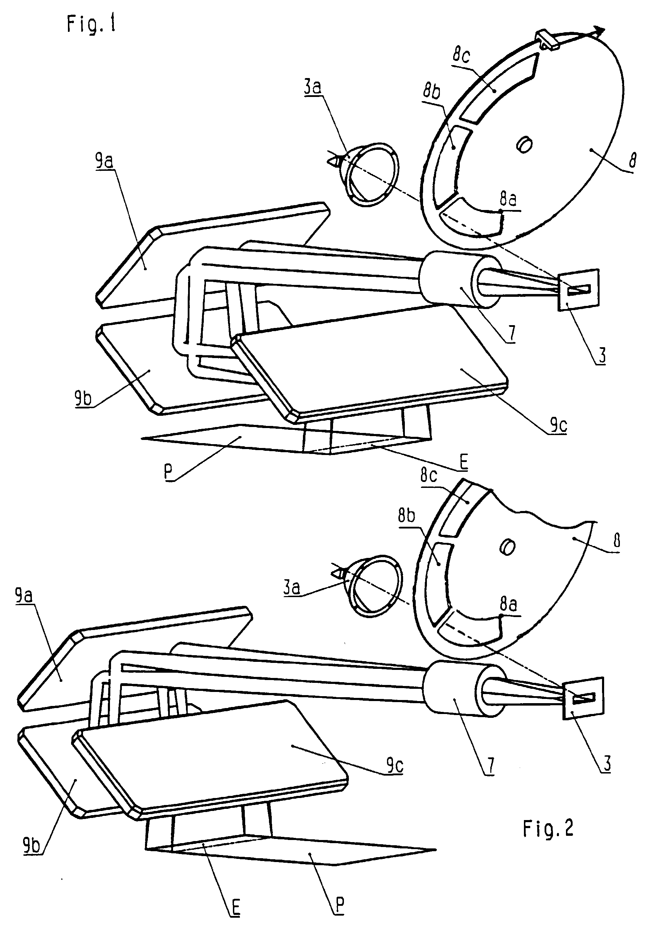

In der Fig. 1 ist das Prinzip einer Belichtungseinrichtung mit Merkmalen gemäß der Erfindung dargestellt. Eine Lichtquelle 3a, die bevorzugt ein kontinuierliches, breitbandiges Lichtspektrum zur Verfügung stellt, wird Licht über eine Filtereinrichtung 8, hier ein Filterrad, mit drei Farbfiltern 8a, 8b, 8c durchleuchtet. Das Filterrad kann von seiner Ausgestaltung und seinem Betrieb her einem üblichen Filterrad entsprechen, das hinreichend bekannt ist und dementsprechend hier nicht weiter beschrieben werden muß. Die verschiedenen Farbfilter 8a, 8b, 8c können gleich groß oder unterschiedlich groß sein, je nach den Lichtempfindlichkeitscharakteristiken des zu belichtenden Kopiermaterials. Es können auch mehr als drei Farbfilter vorgesehen sein, beispielsweise sechs oder mehr, wobei jeweils zwei die gleiche Filtercharakteristik bzw. Farbfiltercharakterstik aufweisen, um keine Totzeiten zu verursachen, wie sie bei dem Filterrad 8 gemäß Fig. 1 auftreten.

Der über die Filter 8a, 8b, 8c des Filterrades 8 ausselektierte spektrale Bereich des Lichtspektrums trifft auf eine Spiegelmatrix 3 mit einzeln bzw. in Gruppen auslenk baren Spiegeln, die auch unter dem Begriff "digitales Mikrospiegelfeld" oder "DMD" (Digital Micromirror Device) bekannt ist.

Über ein Objektiv 7 wird das von der Spiegelmatrix bzw. dem digitalen Mikrospiegelfeld durch Auslenkung einzelner oder mehrerer Gruppen von Spiegeln reflektierte Licht auf eine Anordnung von Umlenkspiegeln 9a, 9b, 9c geworfen, über die die Abbildung auf ein lichtempfindliches Kopiermaterial P erfolgt. Auf dem lichtempfindlichen Kopiermaterial P erfolgt eine streifenweise Belichtung, wobei der Umlenkspiegel 9c über das Kopiermaterial P entsprechend den abzubildenden Bildinformationen hinweg bewegt wird. Natürlich kann umgekehrt auch das Kopiermaterial P bewegt werden, während die Spiegelanordnung starr gehalten wird. In beiden Fällen kann ein Belichtungsstreifen I über das Kopiermaterial P bewegt werden.

Wie bereits angedeutet, wird die Beweglichkeit der Abbildungsoptik bzw. die Relativbewegung des Belichtungsstreifens I relativ zum Kopiermaterial P durch drei in den Strahlengang zwischen dem Objektiv 7 und dem Kopiermaterial P eingefügten Spiegeln 9a, 9b und 9c erreicht. Diese werden parallel zur Ebene des Kopiermaterials P in Richtung senkrecht zur Längsrichtung des Belichtungsstreifens I durch geeignete Antriebsmittel, beispielsweise Schrittmotore, verschoben. Die beiden Umlenkspiegel 9a und 9b sind relativ zueinander ortsfest und stehen im rechten Winkel zueinander, so daß sie den Strahlengang um 180° umlenken. Der Umlenkspiegel 9c ist parallel zum Umlenkspiegel 9b angeordnet und lenkt den Strahlengang um 90° auf das Kopiermaterial um. Der Umlenkspiegel 9c bewegt sich in die gleiche Richtung wie die beiden Umlenkspiegel 9a und 9b, jedoch mit der doppelten Geschwindigkeit wie die Umlenkspiegel 9a und 9b, so daß die optische Bildlänge zwischen dem Objektiv 7 und dem Kopiermaterial P unabhängig von der Stellung der Umlenkspiegel konstant bleibt. Durch diese Bewegung der Umlenkspiegel wird der streifenförmige Belichtungsbereich I über das Kopiermaterial bewegt, wie dies der Fig. 1 in Zusammenschau mit der Fig. 2 deutlich zu entnehmen ist.

Die erforderliche Relativbewegung kann auch durch eine entsprechende Verstellung der gesamten Abbildungsoptik einschließlich dem digitalen Mikrospiegelfeld erfolgen.

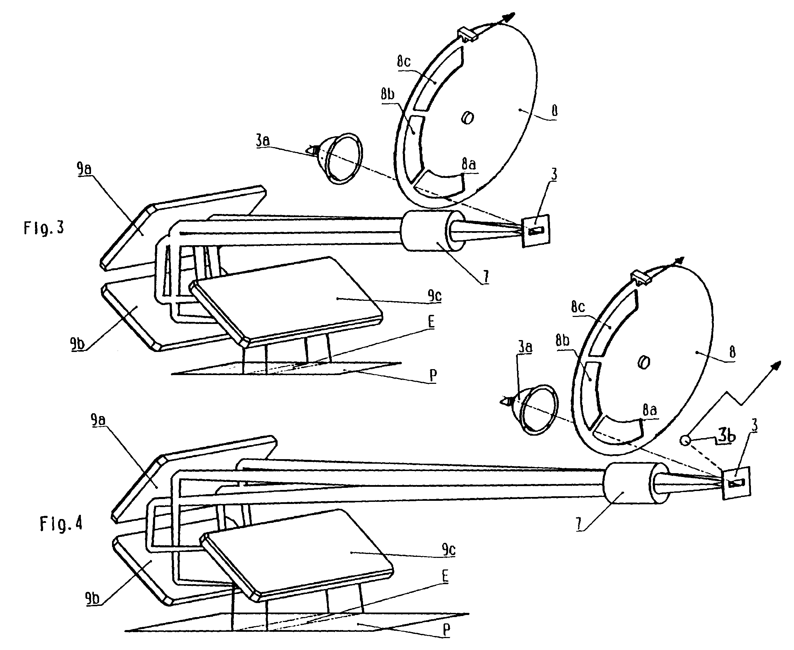

Die Fig. 3 und 4 zeigen auch, wie mit einer beweglichen Abbildungsoptik gemäß den Fig. 1 und 2 die Vergrößerung des Abbildungssystems verstellt werden kann. Wie zu erkennen ist, kann einerseits der Abstand zwischen dem Objektiv 7 und dem digitalen Mikrospiegelfeld 3 und andererseits die optische Bildlänge zwischen dem Objektiv 7 und dem Kopiermaterial P verändert werden. Die Fig. 3 und 4 zeigen die Umlenkspiegel und das Objektiv bei zwei verschiedenen Einstellungen eines Vergrößerungsmaßstabes. Die Vergrößerung kann auch auf andere Weise geändert werden, beispielsweise durch die Veränderung des Abstandes zwischen dem Umlenkspiegel 9c und dem Kopiermaterial P und durch entsprechende Verstellung des Objektivs 7.

Die Fig. 4 zeigt zusätzlich, daß ein Sensor, beispielsweise in der Form einer Fotozelle, 3b vorgesehen sein kann, um Licht zu erfassen und meßtechnisch auszuwerten, das von dem digitalen Mikrospiegelfeld reflektiertes Licht, das nicht dem Objektiv 7 zugeführt wird. Dieses Licht bzw. die daraus über den Sensor 3b erfaßten Meßwerte können zur Überprüfung der Lichtquelle, insbesondere einer Halogenleuchte 3a, verwendet werden. Mittels dieser Meßwerte, die sowohl integral als auch spektral aufgeteilt erfaßt werden können, kann die Lichtqualität der Leuchte 3a bestimmt werden. Es ist auch möglich, dadurch einen Zeitpunkt zu bestimmen, wann die Lichtquelle bzw. Leuchte 3a auszuwechseln ist. Dies kann beispielsweise der Fall sein, wenn das Licht der Lichtquelle 3a in bestimmten Farbbereichen des Spektrums an Intensität verliert. Andererseits kann die Lichtquelle auch mittels der erhaltenen Meßwerte über eine geänderte Strom- bzw. Spannungszufuhr geregelt werden, um die Lichtqualität und damit die Qualität der herrustellenden fotografischen Bilder aufrechtzuerhalten. Der von dem Sensor 3b ausgehende Pfeil deutet Meßleitungen an, die zu einer Auswerte-Elektronik gehen können. Entsprechend wird auch ein Abgriff für Meßwerte am oberen Ende des Filterrades 8 vorgesehen, über den erkannt wird, in welcher Stellung das Filterrad 8 bzw. dessen Filter bzw. Farbfilter 8a, 8b, 8c relativ zu dem Strahlengang zwischen der Leuchte 3a und dem digitalen Mikrospiegelfeld 3 ist.

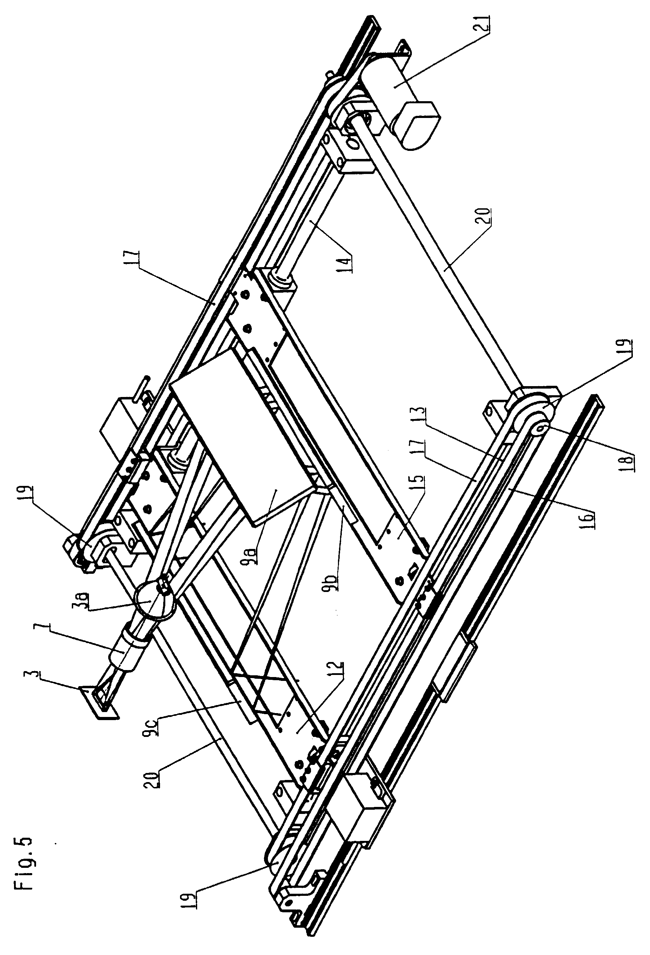

Die Figur 5 zeigt, wie eine Abbildungsanordnung gemäß den Figuren 1 und 2 praktisch realisiert werden kann. In einem nicht gezeigten Geräterahmen sind zwei Führungsstangen 13 und 14 befestigt, auf denen zwei Spiegelschlitten 12 und 15 beweglich und parallel zueinander angeordnet sind. Auf dem Spiegelschlitten 12 ist der Umlenkspiegel 9c, auf dem Spiegelschlitten 15 sind die beiden Umlenkspiegel 9a und 9b montiert. Zu beiden Seiten der beiden Spiegelschlitten 12 und 15 sind je zwei Transportriemen 16 bzw. 17 zwischen je zwei Riemenscheibenpaaren 18 bzw. 19 aufgespannt. Die Riemenscheiben 18 und 19 sitzen paarweise auf gemeinsamen Antriebswellen 20 und werden von einem von der hier nicht dargestellten Steuerung 2 gesteuerten Antriebsmotor 21 synchron angetrieben. Die den Transportriemen 16 zugeordneten Riemenscheiben 18 besitzen exakt den halben Durchmesser der den Transportriemen 17 zugeordneten Riemenscheiben 19. An den Transportriemen 17 ist der erste Spiegelschlitten 12 befestigt, an den Transportriemen 16 der zweite Spiegelschlitten 15. Somit können die auf den Spiegelschlitten 12 und 15 montierten Umlenkspiegel 9c bzw. 9a und 9b mittels des Antriebsmotors 21 parallel zu den Führungsstangen 13 und 14 verstellt werden, wobei sich der Umlenkspiegel 9c zwangsläufig stets mit der doppelten Geschwindigkeit der beiden Umlenkspiegel 9a und 9b bewegt.

Selbstverständlich ist es im Rahmen der Erfindung auch möglich, die streifenförmigen Abschnitte A der Vorlage auch in mehr als zwei Teilabschnitte einzuteilen, wobei dann entsprechend mehrere Objektive für die Abbildung vorgesehen sind und die übrigen Komponenten entsprechend angepaßt werden müssen.

In den lediglich verbal beschriebenen Beispielen grenzen die Teilbelichtungsbereiche jeweils nahtlos aneinander. Um die ganze Anordnung weniger empfindlich auf Justierungsfehler zu machen, kann es von Vorteil sein, die Teilbelichtungsbereiche (und die zugrundeliegenden Teilabschnitte der Vorlage) etwas zu überlappen, beispielsweise um etwa 1-50 Pixel. Wegen der sich dadurch ergebenden Doppelbelichtung im Überlappungsbereich ist eine entsprechende Korrektur (Reduktion der Helligkeit) der mittels des Wandlerorgans erzeugten Darstellungen der Teilabschnitte der Vorlage in den Überlap pungsbereichen erforderlich. Beispielsweise kann dazu die Helligkeit der Bildpunkte in den Überlappungsbereichen von innen nach außen linear auf null reduziert werden.

Als elektrooptisches Wandlerorgan 3 kann im Prinzip jeder beliebige pixelweise arbeitende, aktive oder passive Typ eingesetzt werden. Beispiele dafür sind, wie schon erwähnt, Kathodenstrahlröhren, Leuchtdiodenfelder, Elektrolumineszenzfelder oder Flüssigkristallfelder. Ganz besonders vorteilhaft sind jedoch sogenannte digitale Mikrospiegelfelder (DMD = Digital Mirror Device), wie sie z.B. auch in Großbildprojektionsgeräten verwendet werden. Ein typisches, für die Zwecke der Erfindung geeignetes digitales Mikrospiegelfeld umfaßt auf einem Chip eine Anordnung von 1280 x 1024 Spiegeln, die durch elektrische Ansteuerung selektiv zwischen zwei definierten Kippstellungen hin und her geschwenkt werden können. Für die Zwecke der vorliegenden Erfindung wird beispielsweise nur ein 1280 x 300 Einzelspiegel umfassender streifenförmiger Bereich des Mikrospiegelfelds ausgenützt.

Solche Mikrospiegelfelder werden naturgemäß in Reflexion betrieben, sind also passiv. Sie werden im praktischen Einsatz so vor der Pupille eines Abbildungsobjektivs angeordnet, daß die Mikrospiegel das sie beaufschlagende Licht in der einen Kippstellung in das Abbildungsobjektiv und in der anderen Kippstellung an der Pupille des Abbildungsobjektivs vorbei lenken. Die Intensitätsmodulation des reflektierten Lichts erfolgt dabei durch intermittierende Ansteuerung der Mikrospiegel mit entsprechendem Tastverhältnis. Aufbau, Ansteuerungstechniken und Anwendungsmöglichkeiten solcher digitaler Mikrospiegelfelder sind in den einschlägigen Publikationen der Herstellerfimen, z.B. der Firma Texas Instruments, Houston, Texas, USA, im Detail beschrieben und sind nicht Gegenstand der vorliegenden Erfindung.

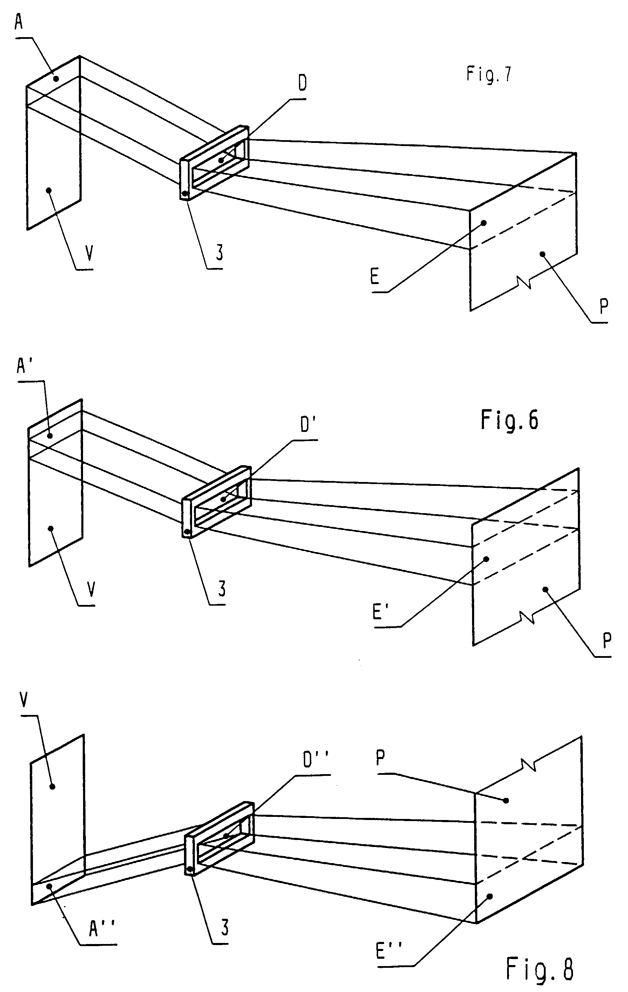

Die Figuren 6-8 verdeutlichen das Prinzip der zeilen- bzw. streifenförmigen Aufbelichtung. Die durch die Gesamtheit aller abgespeicherten Helligkeits- und Farbinformationen für jeden einzelnen ihrer Bildpunkte repräsentierte Vorlage ist mit V bezeichnet. Die hier nicht dargestellte Steuerung 2 liest die Bildinformation eines ersten streifenförmigen Abschnitts A der Vorlage V aus und steuert damit ein pixelweise arbeitendes elektrooptisches Wandlerorgan 3 an, welches anhand der ihm zugeführten Signale eine bildmäßige optische Darstellung D des streifenförmigen Abschnitts A erzeugt. Das elektrooptische Wandlerorgan 3 kann z.B. durch ein Leuchtdiodenfeld mit z.B. 1280 x 300 Einzeldioden oder vorzugsweise, wie weiter unten noch erläutert, durch ein digitales Mikrospiegelfeld mit einer entsprechenden oder größeren Anzahl von Einzelspiegeln gebildet sein. Die vom elektrooptischen Wandlerorgan 3 erzeugte - ebenfalls streifenförmige - optische Darstellung D des streifenförmigen Abschnitts A der Vorlage V wird nun mittels einer hier nicht dargestellten Abbildungsoptik in einem (in diesem Beispiel ortsfesten) streifenförmigen Belichtungsbereich E auf ein fotografisches Kopiermaterial P abgebildet und dabei auf dieses aufbelichtet (Fig. 7). Daraufhin wird ein nächster streifenförmiger Abschnitt A' ausgelesen, davon eine optische Darstellung D' erzeugt und diese auf das gleichzeitig um eine entsprechende Weglänge relativ zum Belichtungsbereich E vorgeschobene Kopiermaterial P aufbelichtet (Fig. 6). Das ganze wiederholt sich nun so lange, bis die gesamte Vorlage erfaßt ist und der letzte streifenförmige Abschnitt A'' der Vorlage ausgelesen, davon eine optische Darstellung D'' erzeugt und diese auf das Kopiermaterial P aufbelichtet ist (Fig. 8).

Wie man erkennt, liegen die streifenförmigen Abschnitte A der Vorlage nicht nebeneinander, sondern sie überlappen sich zu einem großen Teil (quer zu ihrer Längsrichtung). Dies führt dazu, daß sich auch die auf das Kopiermaterial P aufbelichteten Streifen überlappen, das Kopiermaterial P also je nach Überlappungsgrad mehrfach belichtet wird. Dieser Mehrfachbelichtung wird dadurch Rechnung getragen, daß die Helligkeitswerte der einzelnen Bildpunkte der optischen Darstellungen D der Abschnitte A (ggf. farbselektiv) durch die Steuerung 2 entsprechend herabgesetzt werden, so daß die das Kopiermaterial in den jeweiligen Bildpunkten beaufschlagenden Kopierlichtmengen in der Summe wieder korrekt sind. Diese Belichtungsmethode ist unter der Bezeichnung TIG (Time Integration Grayscale) allgemein bekannt.

Bis hierher entspricht das Verfahren dem Stand der Technik und bedarf soweit keiner weiteren Erläuterung.

Wie man erkennt, entspricht die Länge der streifenförmigen, die gesamte Breite der Vorlage überdeckenden Abschnitte A der Länge (der nutzbaren Fläche) des elektrooptischen Wandlerorgans 3. Die Auflösung in Streifenlängsrichtung ist somit durch die Anzahl der einzelnen Pixel des Wandlerorgans 3 in Längsrichtung gegeben. Mit den heute kommerziell zur Verfügung stehenden Wandlerorganen (maximale Pixelanzahl in Längsrichtung etwa 1280) ist jedoch die erreichbare Auflösung bei größeren Vergrößerungsmaßstäben (großformatige Bilder) in vielen Fallen qualitativ nicht ausreichend. Hier setzt nun die Erfindung an.

Die streifenförmigen Abschnitte der Vorlage können auch in zwei oder mehrere, in Längsrichtung hintereinander liegende Teilabschnitte eingeteilt und von jedem Teilabschnitt wird mittels des elektrooptischen Wandlerorgans eine separate Darstellung erzeugt, welche die gesamte Länge des Wandlerorgans ausfüllt. Diese separaten Darstellungen werden mittels einer für diese Zwecke speziell ausgebildeten Abbildungsoptik lagerichtig in Längsrichtung hintereinander liegenden Teilbelichtungsstreifen auf das Kopiermaterial aufbelichtet, so daß die aufbelichteten Teilstreifen zusammen wieder die Bildinformation des aus den Teilabschnitten bestehenden streifenförmigen Abschnitts der Vorlage enthalten. Durch diese Aufteilung der streifenförmigen Vorlageabschnitte in zwei oder mehrere Teilabschnitte steht für jeden streifenförmigen Abschnitt der Vorlage ein Zwei- bzw. Mehrfaches der Pixelanzahl in Längsrichtung des Wandlerorgans zur Verfügung, so daß auch bei sehr großformatigen Kopien (typischerweise bis zum Format 12'' x 18'') eine ausreichend hohe Auflösung und damit hohe Bildqualität erreichbar ist.

Ein ebenfalls einsetzbares Verfahren kann mittels eines Beispiels erklärt werden, bei dem jeder streifenförmige Abschnitt A der Vorlage V in zwei Teilabschnitte eingeteilt wird. Aus dem einen Teilabschnitt kann mittels des elektrooptischen Wandlerorgans 3 eine optische Darstellung erzeugt und diese Darstellung in einem Teilbelichtungsbereich auf das Kopiermaterial P aufbelichtet werden. Für den anderen Teilabschnitt kann eine entsprechende andere optische Darstellung und ein anderer Teilbelichtungsbereich eingerichtet werden. Die Erzeugung der beiden Darstellungen und die Aufbelichtung auf das Kopiermaterial erfolgt sequentiell.

Es kann auch ein etwas breiteres elektrooptisches Wandlerorgan 3 eingesetzt werden, so daß mittels desselben Wandlerorgans unter Ausnutzung verschiedener Pixelbereiche jeweils zwei streifenförmige Teilabschnitte der Vorlage gleichzeitig und örtlich parallel dargestellt werden können. Aus dem einen streifenförmigen Teilabschnitt der Vorlage V kann eine obere Darstellung erzeugt und aus dem anderen Teilabschnitt kann eine untere Darstellung erzeugt werden. Diese beiden Darstellungen werden mittels einer für diesen Zweck speziell ausgebildeten Abbildungsoptik gleichzeitig in zwei hintereinander liegenden streifenförmigen Teilbelichtungsbereichen lagerichtig auf das Kopiermaterial P aufbelichtet.

## Patentansprüche

1. Vorrichtung zur Herstellung eines fotografischen Bildes auf einem Kopiermaterial (P) mit den folgenden Merkmalen:
a) einer Abtasteinrichtung, um eine Vorlage zur Gewinnung von Bilddaten zur Herstellung des fotografischen Bildes abzutasten;
b) einer Bilddatenverarbeitungseinrichtung zur Verarbeitung der Bilddaten zu Steuersignalen zur Herstellung des fotografischen Bildes;
c) eine Belichtungseinrichtung mit einer Abbildungsoptik (7, 9a-c) zur Herstellung des fotografischen Bildes, wobei
c1) diese eine Spiegelmatrix (3) mit einzeln auslenkbaren Spiegeln aufweist,
c2) die Belichtungseinrichtung eine bevorzugt breitbandige Lichtquelle (3a), beispielsweise eine Halogenlichtquelle, und
c3) im Strahlengang zwischen der Lichtquelle (3a) und der Spiegelmatrix (3) ist eine Filtereinrichtung (8) angeordnet, um insbesondere bestimmte Spektralbereiche bzw. bestimmte Lichtmengen auszufiltern bzw. durchzulassen.

2. Vorrichtung nach Anspruch 1, dadurch **gekennzeichnet,** daß eine Transporteinrichtung für ein lichtempfindliches Material zur Herstellung des fotografischen Bildes durch die Belichtungseinrichtung vorgesehen ist, wobei die Transportgeschwindigkeit des lichtempfindlichen Kopiermaterials (P) mittels eines Sensors erfaßt bzw. überwacht wird.

3. Vorrichtung nach Anspruch 2, dadurch **gekennzeichnet,** daß die Transportgeschwindigkeit zur Geschwindigkeitsregelung für die Transporteinrichtung und/oder die Belichtungsdauer bzw. -intensitätsregelung über die Spiegel der Spiegelmatrix (3) bzw. die Lichtquelle (3a) heranziehbar ist.

4. Vorrichtung nach einem der Ansprüche 1 bis 3, dadurch **gekennzeichnet,** daß ein Meßsensor (3b) vorgesehen ist, der Licht von der Lichtquelle (3a), das nicht zur Herstellung eines fotografischen Bildes eingesetzt wird, erfaßt, um die Leistung der Lichtquelle (3a) zu regeln.

5. Vorrichtung nach einem der Ansprüche 1 bis 4, dadurch **gekennzeichnet,** daß die Filtereinrichtung als Filterrad (8) oder als additive bzw. subtraktive Filtereinrichtung ausgebildet ist, beispielsweise mit einzeln beweglichen Farbfiltern.

6. Vorrichtung nach einem der Ansprüche 1 bis 5, dadurch **gekennzeichnet,** daß die Abbildungsoptik (7, 9a-c) mittels beweglichern Komponenten eine Relativbewegung zwischen einem bevorzugt streifenförmigen Belichtungsbereich und dem Kopiermaterial (P) bereitstellt.

7. Vorrichtung nach Anspruch 7, dadurch **gekennzeichnet,** daß
a) die beweglichen Komponenten drei Umlenkspiegel (9a, 9b, 9c) umfassen, die parallel zum Kopiermaterial (P) senkrecht zur Längsrichtung des streifenförmigen Belichtungsbereichs linear beweglich angetrieben sind,
b) ein erster und ein zweiter der Umlenkspiegel (9a, 9b) in fester gegenseitiger räumlicher Zuordnung stehen und den Abbildungsstrahlengang um 180° umlenken,
c) ein dritter der Umlenkspiegel (9c) antiparallel zum zweiten Umlenkspiegel (9b) angeordnet ist und den Strahlengang senkrecht auf das Kopiermaterial (P) lenkt, und
d) Antriebsmittel (16, 21) vorgesehen sind, um den dritten der Umlenkspiegel (9c) mit der doppelten Geschwindigkeit des ersten und zweiten der Umlenkspiegel (9a, 9b) zu bewegen.
